# EUROPEAN PATENT APPLICATION

(11) **EP 0 942 275 A2**
(43) Date of publication of application: **15.09.1999**
(21) Application number: 99301693.0
(22) Date of filing: 05.03.1999
(51) Int. Cl.: G01N 1/12

(54) **Sampling device**

(30) Priority: 12.03.1998 GB 9805183
(71) Applicant: BRITISH STEEL PLC, London NW1 5JD (GB)
(72) Inventor: Evans, Kenneth John, Aberavon, Glamorgan, Wales (GB)
(74) Representative: Downing, Michael Philip

(57) **Abstract**

The application describes an improved apparatus for removing samples from depth, and is particularly applicable to molten metal sampling. The sampling device comprises a hollow brittle member sealed at its lower end, having an aperture on a side wall thereof, the aperture being covered with a layer of an adhesively bonded film. When immersed, the adhesively bonded film will disintegrate and allow liquid into the interior of the brittle member. However, the film will take a definite time to disintegrate, and this will allow the device to be submerged to the appropriate depth. On disintegration, only liquid from that depth will enter the brittle member. The exact time taken will vary from material to material, and can be independently varied by varying the thickness. Thickness variation can easily be achieved by applying a plurality of layers of material, or by selecting alternative available thicknesses. Suitable thicknesses are between 0.14 and 0.19 mm, more preferably 0.17 to 0.18 mm. Thicknesses above 0.2 mm tend to take rather a long time to disintegrate, although this may not be the case in particularly harsh environments. A preferred adhesively bonded film is crepe paper, with a cured rubber backing. Acetate is an alternative. It is preferred if the brittle member is elongate and cylindrical, the aperture being on a circumferential face. This can, for example, be a tube with the lower end sealed and the aperture formed therein. It is preferred if the lower end has been drawn to a frangible tip. This facilitates fracture of the brittle member in order to retrieve the metal sample. A suitable material for the brittle member is quartz, as this can be obtained in tube form and the end of the tube sealed and (if desired) drawn.

## Description

The present invention relates to a sampling device. It is particularly (but not exclusively) applicable to the sampling of molten metallic liquids at elevated temperatures.

Our earlier Application GB-A-2002664 describes a sampler suitable for taking a pin sample for hydrogen analysis from a steel melt, consisting of an insulated outer tubular covering, an entry chamber at an end of that tube, and a mould in the form of an unobstructed heat-resistant tube within the tubular outer covering. A protective cap was provided over the entry chamber which included a temporary aluminium seal.

This arrangement was most advantageous, but was somewhat complicated to prepare due to the large number of constituent parts. The insulating outer covering was intended to disintegrate in the melt, together with the temporary seal. The heat resistant tube would then fill with steel which would then freeze after removal from the melt. The entire article was therefore disposable. The complexity (and hence cost) was thus undesirable in a single use item.

An alternative sampler currently available involves a long tube, approximately three metres in length, the end of which is sealed with an stainless steel cap. The cap is of a reasonable thickness and can withstand immersion in molten tin, for example. To use this arrangement, the sealed end of the tube is submerged in (e.g.) the molten tin, to the required depth. A rod is then passed down the bore of the tube. This rod has a pin at one end, approximately 1mm in diameter at its widest. The rod is passed along the entire length of the bore until the pin pierces the aluminium cap. The rod is then withdrawn, allowing tin to flow into the bore from the bath at the required depth.

The rod is then withdrawn from the bath and the now open end placed over a suitable receptacle. Tin pours into the receptacle and solidifies. It can then be passed for analysis.

This arrangement has a number of defects. Where samples are being taken from a relatively shallow depth of tin, the head of liquid which forms within the bore is usually very small. This is for the simple and obvious reason that the head of liquid which forms within the bore will be equal to the depth to which the end of the rod is submerged. Thus, when the rod is withdrawn, there is very little time to move the rod to the receptacle before the entirety of the sample liquid dribbles from the open end through the pierced stainless steel cap. Thus, such samples are very difficult to take reliably. A greater head of tin could be acquired by applying suction to the top of the bore, or by introducing the rod into the liquid at an angle. However, the former has clear safety difficulties whilst the latter can make it difficult to ascertain the depth to which the rod has been submerged.

When sampling deep within the bath, there will be a very significant head of pressure behind the stainless steel cap. Thus, when the cap is pierced, the piercing rod must be withdrawn very quickly indeed to prevent the molten tin catching up with it. This again raises safety concerns and may compromise the depth stability of the hollow rod if the same operator is expected to hold the hollow rod and withdraw the piercing rod.

However, it is routinely necessary to take such samples in order to validate the compositional demands of the liquid. Such samples do need to be taken from a variety of depths, to ensure that the liquid is homogenous. Therefore, despite the above difficulties, the system is used routinely.

The present invention seeks to provide an improved apparatus for removing samples from depth, and is particularly applicable to molten metal sampling. However, it can be applied outside this field, for example to the taking of samples from within corrosive liquids, or other liquids at high temperatures.

The present invention therefore provides a sampling device for liquid metal comprising a hollow brittle ceramic member, having an aperture on a side wall thereof, the aperture being covered with a layer of an adhesively bonded film, the ceramic member being sealed at its lower end thereby to contain a metal sample therewithin.

When immersed, the adhesively bonded film will of course disintegrate and allow liquid into the interior of the brittle member. However, the film will take a definite time to disintegrate, and this will allow the device to be submerged to the appropriate depth. On disintegration, only liquid from that depth will enter the brittle member. The exact time taken will vary from material to material, and can be independently varied by varying the thickness. Thickness variation can easily be achieved by applying a plurality of layers of material, or by selecting alternative available thicknesses. Suitable thicknesses are between 0.14 and 0.19mm, more preferably 0.17 to 0.18mm. Thicknesses above 0.2mm tend to take rather a long time to disintegrate, although this may not be the case in particularly harsh environments.

A preferred adhesively bonded film is crepe paper. An adhesive rubber backing is preferred, particularly a cured rubber backing. It has been found that the burn characteristics of such paper are especially suitable. Such papers are commercially available in an appropriate thickness. Acetate is also suitable, particularly high temperature acetate.

It is preferred if the ceramic member is elongate. A suitable elongate form is cylindrical, the aperture being on a circumferential face thereof. This can, for example, be a tube with the lower end sealed and the aperture formed therein.

It is preferred if the lower end of such a tube or other ceramic member has been drawn to or otherwise formed with a frangible tip. This facilitates fracture of the ceramic member in order to retrieve the metal sample.

A suitable material for the ceramic member is quartz, as this can be obtained in tube form and the end of the tube sealed and (if desired) drawn.

The ceramic member is preferably embedded in a socket made of a high temperature resistant material, such as a refractory or other ceramic sheath. The entire apparatus is preferably mounted on the end of a suitable lance for immersion.

Embodiments of the present invention will now be described by way of example, with reference to the accompanying Figures, in which:-
Figure 1 shows a vertical cross section through a first embodiment of the present invention;
Figure 2 shows a vertical cross section through a second embodiment of the present invention;
Figure 3 shows an alternative tip according to a third embodiment; Figure 4 shows the present invention in use; and
Figures 5 and 6 show an alternative construction of the present inventions in use.

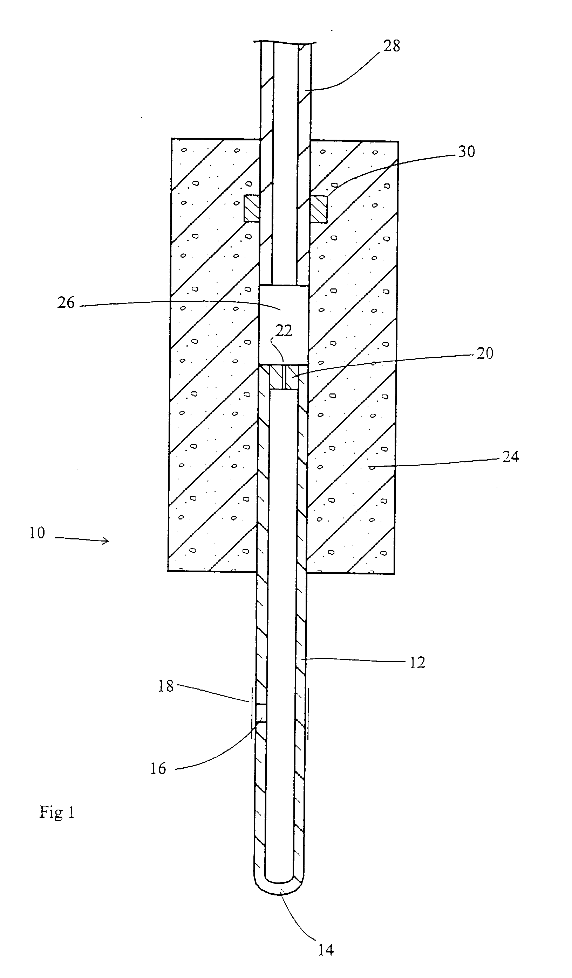

Figure 1 shows a sampling device 10 comprising a quartz tube 12. At its lower end 14, the tube 12 has been sealed. An aperture 16 is formed in a side wall of the tube 12 approximately half way up, and this is sealed by a layer of crepe paper 18. This is attached to the tube 12 via a cured rubber adhesive backing previously applied to the crepe paper. A plug 20 is provided at the open top of the quartz tube 12, with a small through bore 22 to allow escape of air as the quartz tube fills.

The entire tube 12 is held in a cylindrical ceramic body 24. The tube 12 is designed to be a friction fit within an internal bore 26 of the ceramic body 24. Adhesive can be applied to reinforce this.

A hollow lance 28 extends into the top portion of the bore 26. A retaining ring 30 on the outer surface of the lance 28 provides secure retention thereof within the ceramic body 24. Thus, the quartz tube 12 can be raised, lowered and otherwise manipulated at will. The lance is hollow to permit escape of air expelled from the quartz tube 12 by incoming liquid.

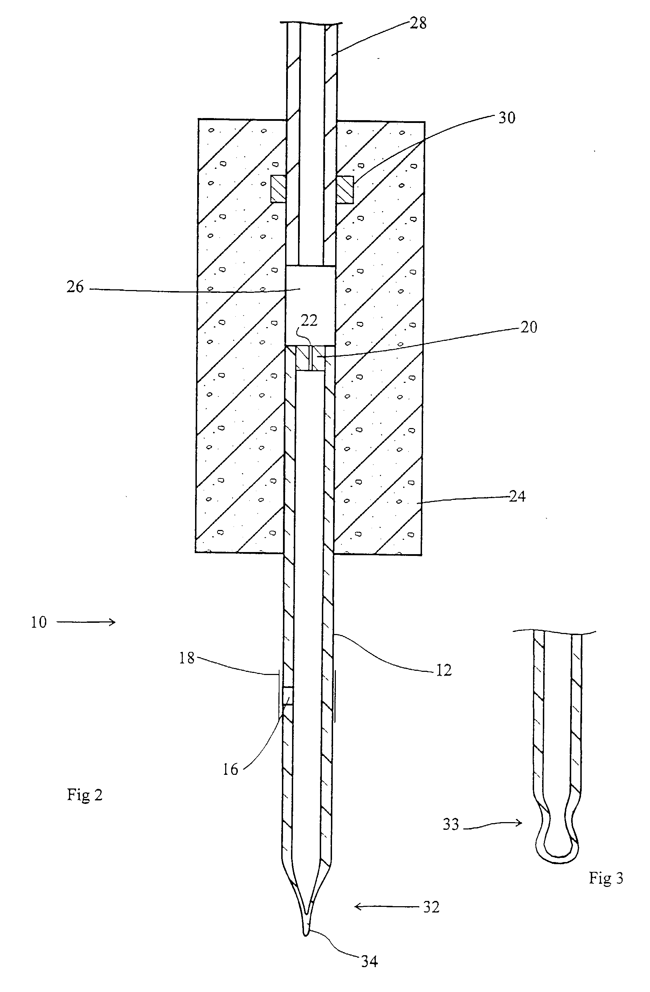

Figure 2 shows a generally similar arrangement 10, in which like reference numerals have been used to denote like parts. The only difference between the first and second embodiments is in the formation of the lower tip 32 of the quartz tube 12. This is drawn to a point 34 by applying suitable force to the tube tip at elevated temperature. This results in the formation of a particularly fragile part at the tip thereof.

Figure 3 shows a further alternative arrangement in which the lower tip 33 is drawn into a teat shape. This also results in the formation of a fragile part at the tip.

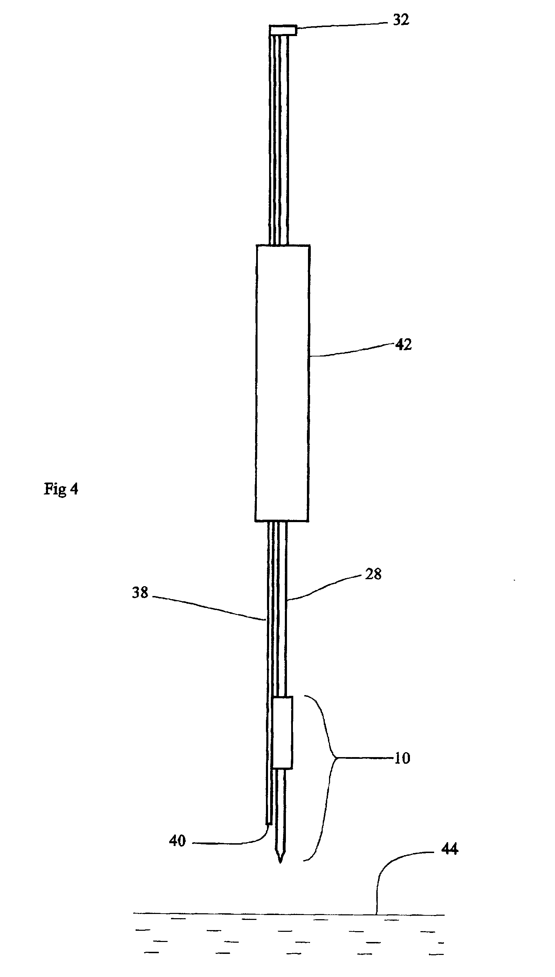

Figure 4 shows an embodiment of the invention in use. A sampling device 10 is fitted to the end of an elongate lance 28. This is held via a support member 36. Alongside the lance 28, there is a thermocouple 38, the sensing tip 40 of which lies generally alongside the aperture 16 (not visible on Figure 4). This entire arrangement is passed vertically through a guide tube 42. This limits undesirable vibrations within the lance 28. As shown, the sampling device 10 is just above the surface 44 of the molten metal bar. From this position, the lance 28 is moved vertically so that the sampling device 10 is immersed to the appropriate depth. The lance 28 is then withdrawn until the sampling device is above the liquid. It can then be moved to one side. Because the aperture 16 is on a side wall of the sampling tube 12, a minimum amount of molten metal will be retained within the tube 12. In the embodiment of Figure 1, this can be left to cool and solidify, following which the quartz tube can be shattered to retrieve the metal sample. In the embodiment of Figures 2 or 3, the tip 34 of the quartz tube 12 can be cut or otherwise broken whereupon the molten metal within the tube will run out of the newly formed hole at the bottom of the tube 12. The receptacle should be filled with water in advance, thus quenching the liquid metal allowing immediate analysis.

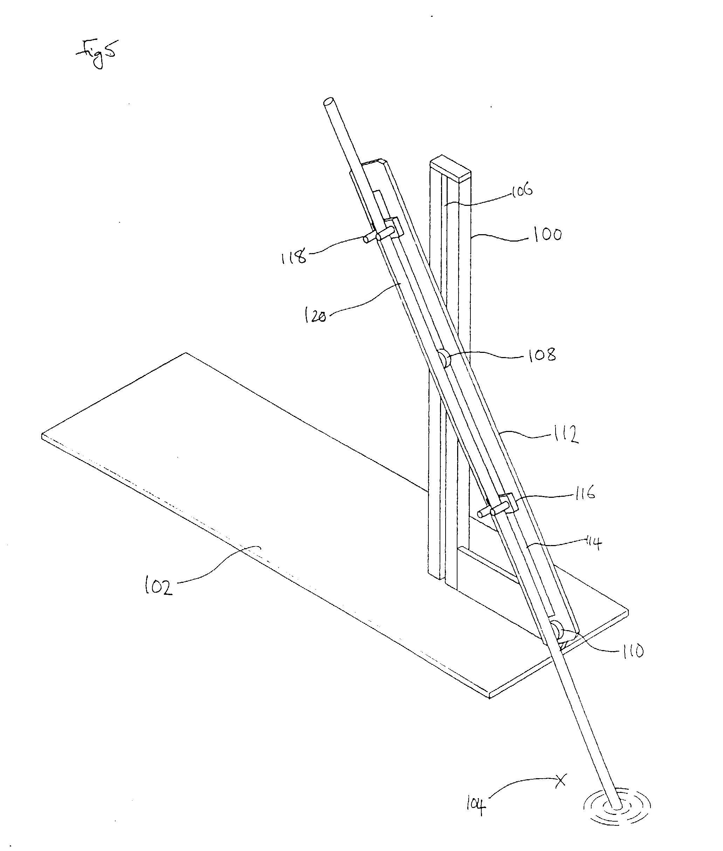

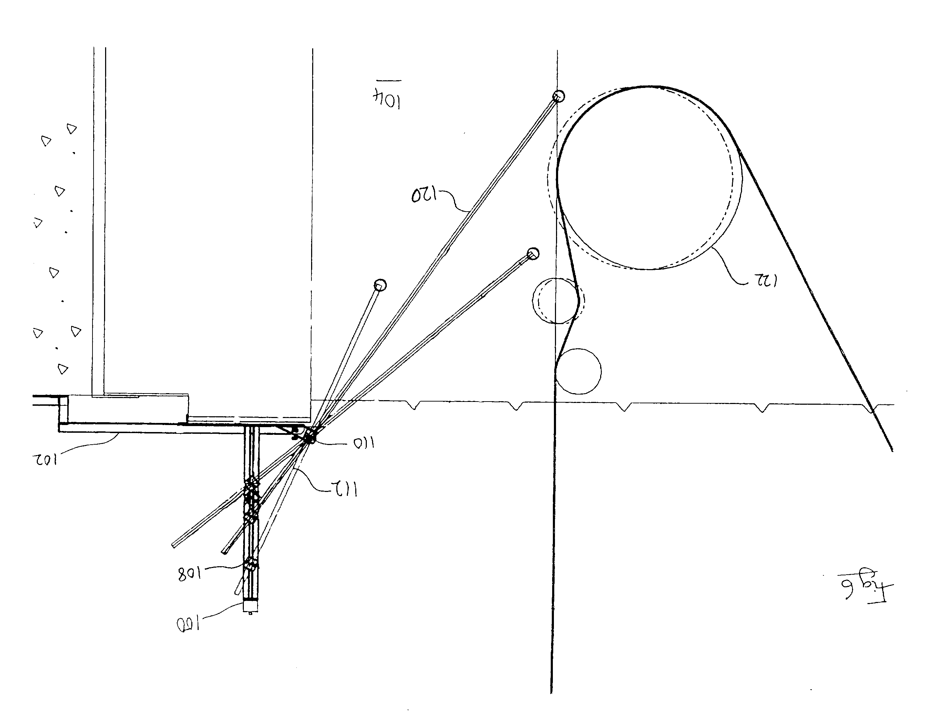

Figures 5 and 6 show an alternative method of positioning the lance within the molten tin bath. An upright 100 is fixed onto a flat surface 102 adjacent the tin bath 104. The upright 100 has a central slot 106 which carries a pivot 108. A further pivot 110 is formed on the surface 102 at the edge thereof, adjacent the molten bath 104.

A tilting arm 112 is attached to the pivots 108 and 110. Attachment to the pivot 110 is by way of a circular aperture formed at one end of the arm 112, thereby allowing the arm to rotate about pivot 110. The pivot 108 is attached to the arm 112 in an elongate socket 114. Thus, as the arm 112 rotates about pivot 110, the pivot 108 slides in the socket 114 and can be tightened to fix the arm 112 at any desired angle relative to the horizontal.

A pair of cradles 116, 118 are provided on the arm 112. These support a lance 120 in a generally parallel disposition relative to the arm 112. The lance 120 can slide within the cradles 116, 118.

Thus, in use, the pivot 108 is set at a desired position and tightened so as to fix the angle of the arm 112. A sampler 10 as illustrated in any one of Figures 1 to 3 is then attached to the end of the lance 120 which is then fitted in the cradles 116, 114. The lance is then lowered in the cradles such that it extends into the bath 104 with the sampler 10 at its end. Suitable graduations along the lance 120 allow its extension to be measured, and together with the angle of the arm 112 this allows the exact position sampler within the bath to be calculated using simple polar co-ordinates. As illustrated in Figure 6, a wide variety of positions and depths within the bath and adjacent the various rollers 122 can be obtained.

It will be appreciated that the above described embodiments provide neat, simple and safe ways to sample liquids such as (for example) molten metals at particular depths, without contaminating the sample with liquid from an alternative depth.

## Claims

1. A sampling device for liquid metal comprising a hollow brittle ceramic member, having an aperture on a side wall thereof, the aperture being covered with a layer of an adhesively bonded film, the ceramic member being sealed at its lower end thereby to contain a metal sample therewithin.

2. A sampling device according to claim 1 wherein the thickness of the film is between 0.14 and 0.19 mm.

3. A sampling device according to claim 1 wherein the thickness of the film is between 0.17 to 0.18mm.

4. A sampling device according to any preceding claim in which the film is crepe paper.

5. A sampling device according to any one of claims 1 to 3 in which the film is acetate.

6. A sampling device according to any preceding claim in which the film has an adhesive rubber backing.

7. A sampling device according to claim 6 in which the rubber backing is cured.

8. A sampling device according to any preceding claim in which the ceramic member is elongate.

9. A sampling device according to claim 8 in which the elongate form is cylindrical.

10. A sampling device according to claim 9 in which the aperture is on a circumferential face of the cylinder.

11. A sampling device according to any preceding claim in which the lower end of the ceramic member has been drawn to or otherwise formed with a frangible tip.

12. A sampling device according to any preceding claim in which the ceramic member is quartz.

13. A sampling device according to any preceding claim in which the ceramic member is embedded in a socket made of a high temperature resistant material.

14. A sampling device according to claim 13 in which the socket is of a refractory or other ceramic material.

15. A sampling device according to any preceding claim, mounted on the end of a suitable lance for immersion.
